# EUROPEAN PATENT SPECIFICATION

(11) **EP 1 782 598 B1**
(45) Date of publication and mention of the grant of the patent: **12.12.2007**
(21) Application number: 05737612.1
(22) Date of filing: 21.04.2005
(51) Int. Cl.: H04L 29/06, A63F 13/12, G06F 9/46

(54) **DYNAMICAL RECONFIGURATION OF DISTRIBUTED COMPOSITE STATE MACHINES**
DYNAMISCHE UMKONFIGURATION VERTEILTER ZUSAMMENGESETZTER AUTOMATEN
RECONFIGURATION DYNAMIQUE D'AUTOMATES FINIS COMPOSITES DISTRIBUES

(30) Priority: 25.08.2004 NO 20043557
(43) Date of publication of application: 09.05.2007
(73) Proprietor: Telefonaktiebolaget LM Ericsson (publ), 164 83 Stockholm (SE)
(72) Inventor: MELBY, Geir, N-1389 Heggedal (NO); HUSA, Knut, Eilif, N-3070 Sande i Vestfold (NO)
(74) Representative: Norin, Klas
(86) International application number: PCT/NO2005/000134
(87) International publication number: WO 2006/022549

(56) References cited:
- US-A1- 2002 007 468
- US-A1- 2002 165 727
- US-A1- 2003 200 526

## Description

### Field of the invention

The present invention relates a method and system disclosing how to implement how changes in specifications of compositions of actors can be reflected in a running system.

### Background of the invention.

From the prior art it is known that Telefonaktiebolaget L.M. Ericsson has developed a prototype of a Service Execution Framework called ServiceFrame [1]. The services will be deployed in networks where current Telecommunication and Internet has merged into an open service oriented network. The services are modelled using UML 2.0 concepts for concurrent state machines communicating asynchronously through message passing.

### ServiceFrame - a service creation and execution environment

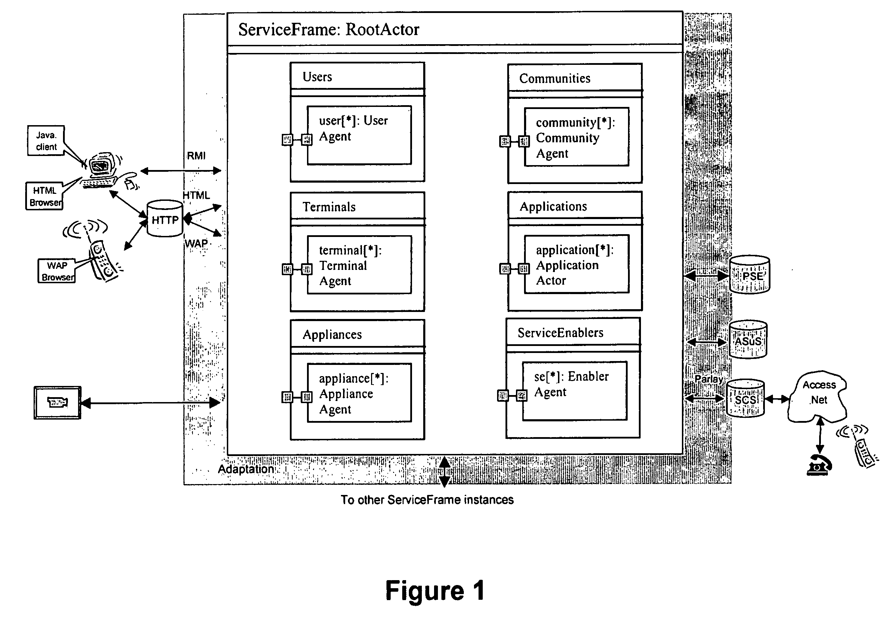

ServiceFrame is an application server in the service network. It provides functionality for communication with users connected through different types of terminals such as phones, PC's or PDA's figure 1. It also provides access to network resources through the OSA API, which enable services to set up phone calls between users.

ServiceFrame itself provides architectural support for service creation, service deployment and service execution. Services are realized by ServiceFrame applications that are defined by specializing and instantiating framework classes. In addition it has mechanisms that support incremental development and deployment of services.

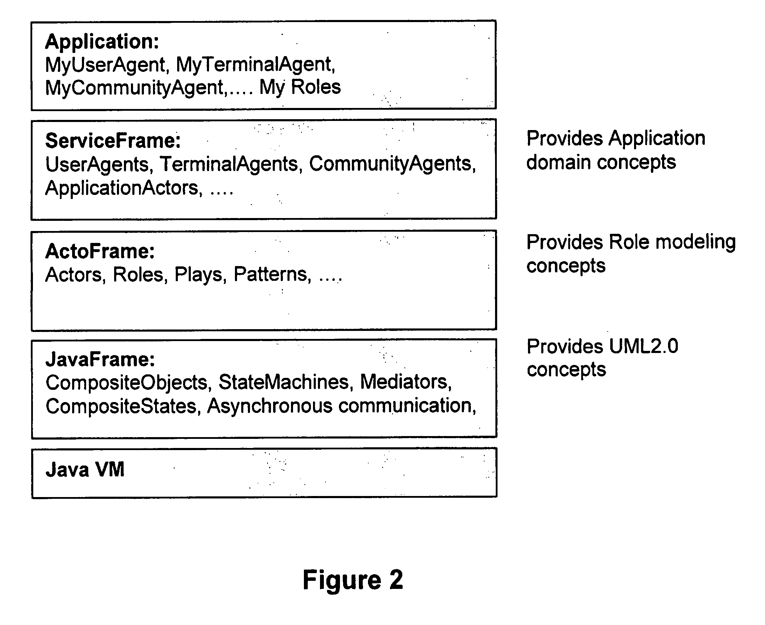

ServiceFrame is layered on top of ActorFrame and JavaFrame as shown in figure 2. ActorFrame is a generic application framework that supports the concept of actors and roles. With ActorFrame actors play roles and involve other actors to play other roles. Actors may contain other actors. JavaFrame is both an execution environment and a library of classes used to implement concurrent state machines and asynchronous communication between state machines. JavaFrame is implemented using J2EE technology.

ActorFrame uses the well-known metaphor that *"actors play roles".* Actors are objects that play different roles. Hence, a service may be defined in terms of collaborating service roles where a service role is the part an actor plays in a service. Models that use the ActorFrame concepts are called ActorFrame models.

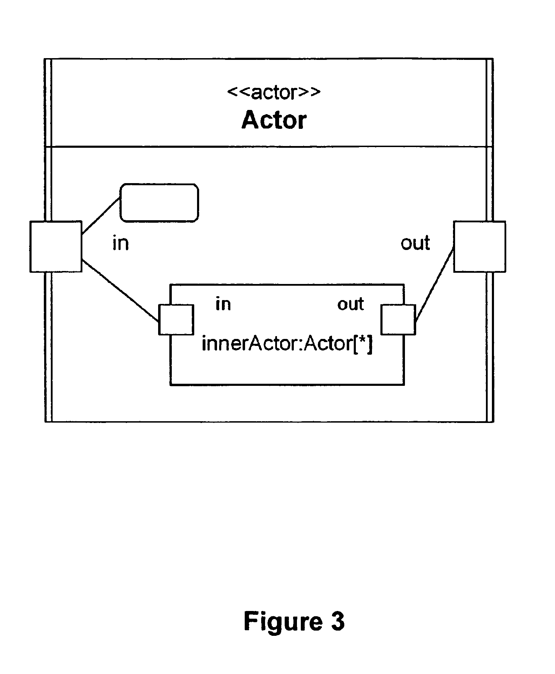

Actor is the core concept of ActorFrame. An actor, illustrated in figure 3, is an object having a state machine and an optional inner structure of actors. Some of these inner actors are static, having the same lifetime as the enclosing actor. The state machine of an actor will behave according to the generic actor behaviour that is common to all actors. If the actor shall play several roles, this is accomplished by creating several inner actors each playing one of the desired roles.

Communication between an actor and its environment takes place via an *Inport* and *Outports.*

### Package overview of ActorFrame

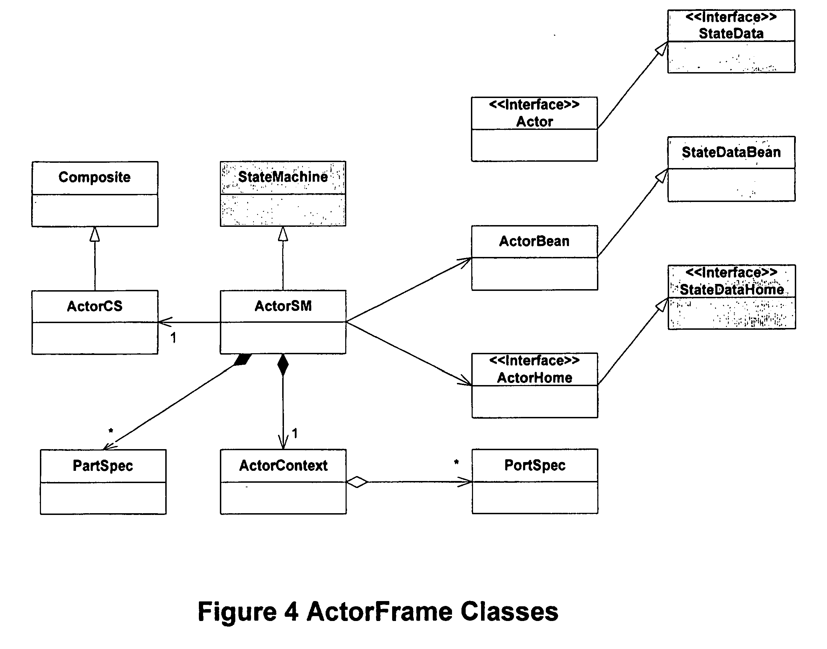

- ActorFrame is implemented in Java in a package called *actor frame.* The main classes are as follows refer to figure 4:

- *ActorSM* that defines "housekeeping" methods used in the transaction of *ActorCS.* E.g. Initialisation, creation of parts, release of associations. It also defines utility methods intended for the developer like *sendRoleRelease* and *sendRoleRequest*.
- *ActorCS* that defines the behaviours of the Actor. The various behaviours of the Actor will be described in this chapter.
- *ActorContext* that is a special class that holds the associations to other Actors.
- *ActorBean* that is a class that defines the data structure of the entity bean.
- *Actor* that extends the *StateData* class contains get and set methods for the data elements of the entity bean.
- *ActorHome* that extends the *StateDataHome* interface with methods for creation of entity beans and find entity methods.
- *PartSpec* that defines a part of the Actor.
- *PortSpec* that defines a port and connection of the *Actor.*

### Problems with existing solutions

The existing service platforms do not provide support for dynamic reconfiguration of executing services without stopping the service(s) and this in turn affects the availability of the services.

Also, the existing protocols in ActorFrame does not support the dynamically deployment and reconfiguration of services implemented as actors. The actors have support for creation and deletion of actors, but this is not done as part of the configuration of the system. It is more as a part of the service it self. So current versions lacks mechanism for specifying the configuration of the actors system, which automatically cause changes of the running system.

In order to configure the structure (assuming that services consist of many components) of running services all influenced components of the services must be updated. This is a complex task due to the dependencies among the components. Hence the services need to be deployed and reconfigured dynamically to meet the demands from the market.

There exist no public available known solutions to this problem.

### Summary of the invention

As to overcome the problems as described above the present invention discloses method for dynamically deployment and reconfiguration of services such as peer to peer type of services using a protocol suite running on a generic distributed middleware platform, such as ActorFrame where said method comprise the steps of:
detecting changes in the configuration specification for one or more actors and responding to changes in the configuration specification for the actors with a response sent to affected actors so as to take needed actions according to the changes, and
dynamically and preferably in real time reconfigure the affected actors with reconfigurations as follows:
   adding one or more new actors and changing a number of maximum and minimum number of allowed actors and
   reconfiguring existing connections between actors

Further the present invention discloses a corresponding protocol suite for dynamically deployment and reconfiguration of services such as peer to peer type of services running on a generic distributed middleware platform, such as ActorFrame where the protocol suite is adapted to:
detect changes in the configuration specification for one or more actors and to respond to changes in the configuration specification for the actors with a response sent to affected actors so as to take needed actions such as add new instances of actors according to the changes, and
the protocol suite is further adapted to dynamically and preferably in real time to reconfigure the affected actors with reconfigurations as follows:
to add new instances of actors and to change number of maximum and minimum number of allowed actors instances, and
to remove or reconfigure existing connections between actors thereby allowing changes of structures (such as) as versions of one or more actor changes in order to add new connections between actors to adapt to new actors.

### Brief descriptions of the drawings

Figure 1 shows a ServiceFrame - Service Execution Framework,
Figure 2 shows ServiceFrame layers
Figure 3 shows Class Actor
Figure 4 shows ActorFrame Classes
Figure 5 shows the RoleRequest protocol
Figure 6 shows Multiple roles and actors
Figure 7 shows A simple service.
Figure 8 shows Configuration of BetaActor
Figure 9 BetaActor xml configuration file
Figure 10 Communication Diagram of RoleRequest pattern
Figure 11 RoleRequest protocol
Figure 12 port setup process
Figure 13 Role create process
Figure 14 Inquired Role view of Actor State Machine
Figure 15 Requested Role view of Actor state machine
Figure 16 Initial role view of Actor state machine
Figure 17 Role update sequence
Figure 18 Update role view of Actor State machine
Figure 19 Updated part view of Actor State machine
Figure 20 Role Release sequence
Figure 21 Role Release view of Actor state machine
Figure 22 Role Remove interaction
Figure 23 Role Remove view of Actor state machine

### Detailed description

To make the present invention readily understandable reference will be made to the accompanying drawings, further to point out the essence of the present invention the basic concepts will be outlined in the following section

### Basic Concept

The invention consists of new protocols for ActorFrame that provide solutions for
- detecting changes in the configuration specification for actors and notifying affected actors to take needed actions according to the changes.
- dynamic reconfiguration of the affected actors such as
   o adding new instances of actors and changing number of maximum and minimum number of allowed actors instances
   o removing or reconfiguration of existing connections between actors to allow changes of structures as changing of versions of an actor
   o adding new connections between actors to adapt new actors.

These additions to the current version of ActorFrame provide the basic solution to the problem of dynamically changing of services deployed on the ServiceFrame execution framework. It may be also adapted to other service platforms following the approach described in this invention.

The invention consists of a set of ActorFrame protocols and state machines used to implement the actor configuration in request. The Actor configuration specifies the structures of actors and the connections among them. In the invention an XML file format is selected for describing the Actor configuration to be deployed.

In this chapter we will first give a brief overview of the generic behaviour of Actors and the usage of the protocols. Further, we will introduce the description format of the Actor configuration files. Eventually we describe the state machine and signal sequence diagrams of the ActorFrame protocols in a detailed manner.

This section contains subsections describing the following matters:
A first section (Actor Protocols) giving an overview of Actor protocols and its usage
A second section (Actor Configuration) giving a description of Actor configuration files
A third section (Messages) disclosing a description of the messages involved in the protocols
A fourth section (Role Creation) disclosing protocols and state machines related to the Actor creation process
A fifth section (Role Update) disclosing protocols and state machines related to the Actor update process
A sixth section (Role Release) disclosing protocols and state machines related to the Actor release process
The seventh section (Role Remove) disclosing protocols and state machines related to the Actor removal process

### Actor protocols

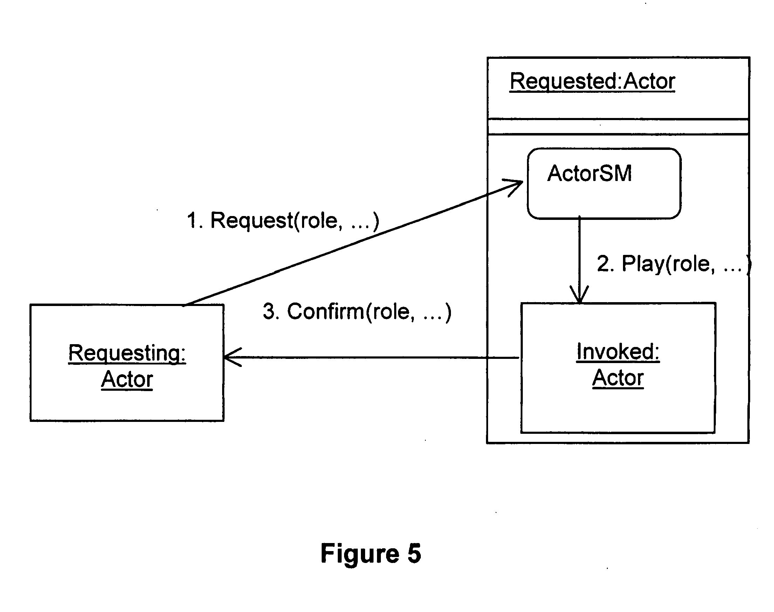

Actors have protocols for role requests and role releases used during configuration. New roles can be created dynamically and initiated on requests. The intention is that an actor can request another actor to initiate new roles (actors) to do a requested service. Figure 5 describes how an actor will either deny the request or invoke an actor to play the requested role or an acceptable alternative role.

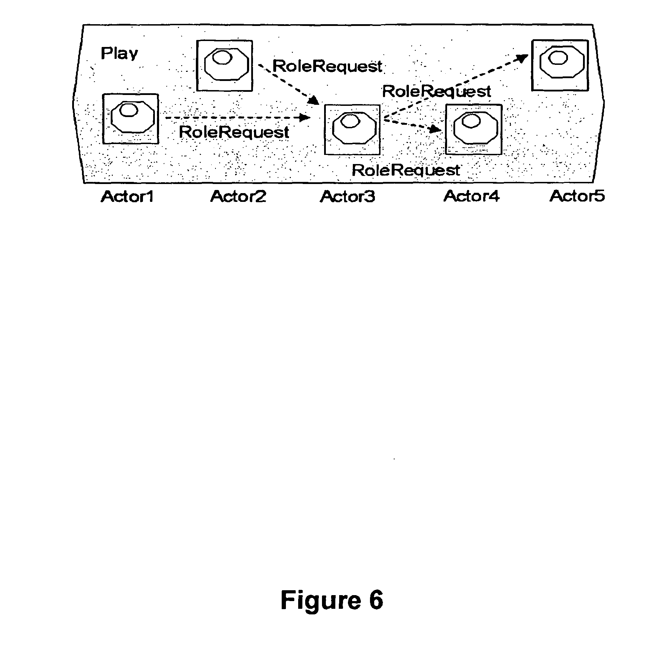

As shown in figure 6 an actor may request several other actors and several other actors may request one actor. All actors are running in parallel. An actor may play several roles in parallel. If a requested role is released from all requestors, the requested actor will delete the role. If a requested actor or role is defined but it does not exist, it will be created, if it is allowed to be involved

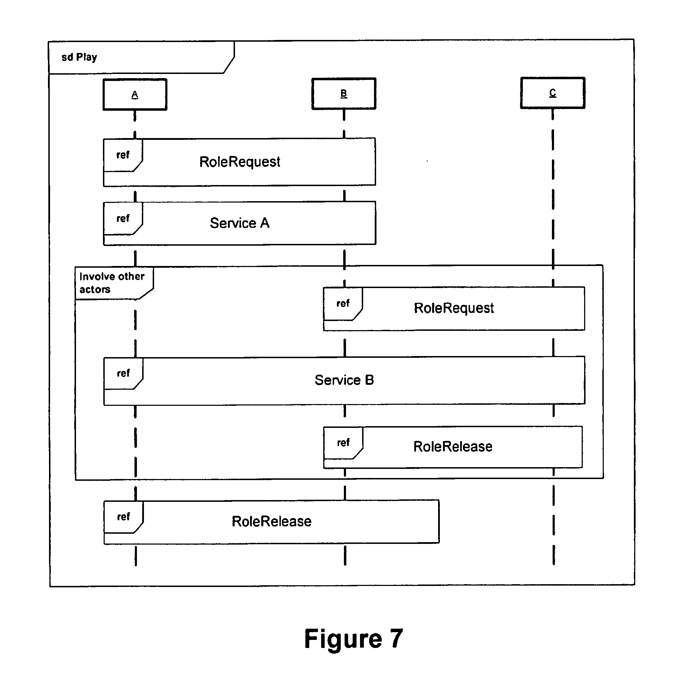

The basic feature of the protocol is to allow an actor (requestor) to request another actor to play a specific role and to allow the actors to interact to perform a service or a play. The protocol also includes a protocol to release a requested role. Figure 7 shows a typical pattern of how *RoleRequest* and *RoleRelease* are used to invoke other actors to play services. One *RoleRequest* may lead to another *RoleRequest* as shown in the figure. Release of roles may lead to deleting of actors if they play no more roles. It is also possible to define that an actor may exist although it does not play any roles.

### Actor configuration

The internal structure of all types of actors in a system is defined by associated actor descriptor files. Actor descriptor files have XML format and contains entries for:
- Ports and connections
- Internal instances (a.k.a. roles, actors, parts) with multiplicities and initial configuration

An Actor xml configuration file contains the following elements:
- <description> -- description of the actor type
- <actortype> -- name of actor type
- <part> -- part specification, the configuration file can contain several part elements
   o <parttype> -- every part has a type
   o <min> -- minimum number of instances
   o <max> -- maximum number of instances
   o <instances> -- the instance names of the initial parts. If omitted instance names are automatically generated at instantiation time
   o <port> -- port definitions, a part can have several ports
      ■ <name> -- name of the port
      ■ <requestedRole> -- the address of the role that the port connects to
      ■ <inquiredRole> -- the address of the role that contains the requested role. If omitted the default is the parent actor.

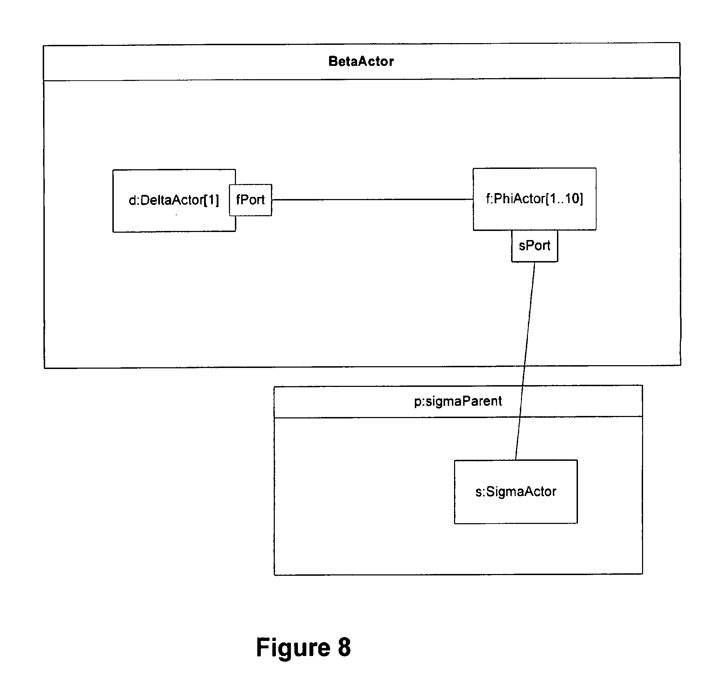

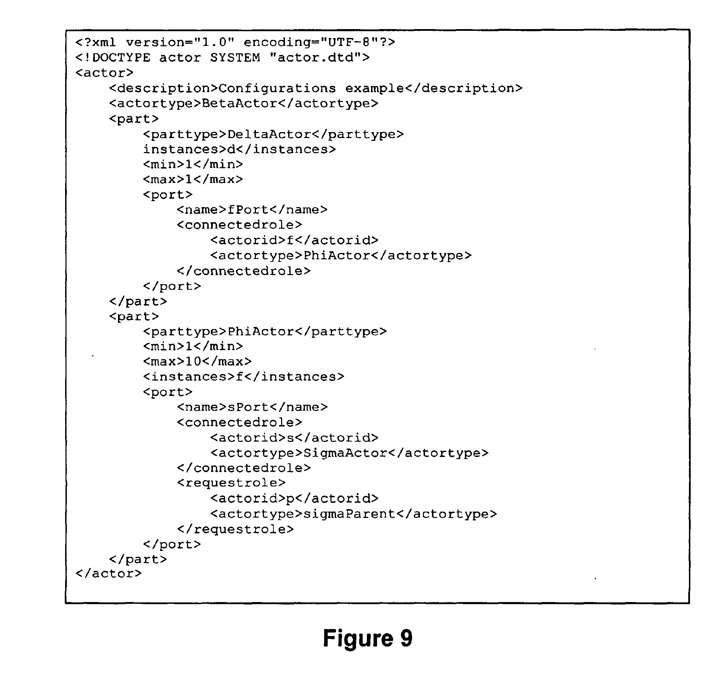

Figure 8 shows an example of an Actor configuration drawn in a structure diagram. The associated actor description file is shown in figure 9.

The two parts *d:DeltaActor* and *f:PhiActor* are drawn in figure 8 connected with a port *fPort* from d to f. BetaActor xml configuration file in figure 9 contains the corresponding definitions. Two *<part>* elements are described along with a *<port>* element directed from part d to part f. The name of the initial part instances are d and f respectively. The *<min>* and <max> elements define that there can only be one *DeltaActor* and up to ten *PhiActors.* The port name is defined in the *<name>* element below *<port>* as *fPort.* Eventually a port and connection is directed out of the enclosing composite from *f:PhiActor* to *s:SigmaActor.* Due to the fact that *s:SigmaActor* is part of another enclosing composite object, the element *<requestedrole>* is required to define the instance name and type of this encloser.

### Messages

This subsection contains all messages involved in the ActorFrame package.

| **MessageType:** | **RoleRequestMsg** |
|---|---|
| **Description:** | RoleRequestMsg is sent to an Actor to ask if the Actor is willing to play a Role (taken care of by a child/innerActor). |
| **Parameters:** | java.lang.String roleID - The roleID of the requested role. If omitted the inquired actor will assign a random roleID, java.lang.String roleType - The actor type of the requested role, java.io.Serializable credential - The credentials of the requesting role |
| **Usage:** | Figure 10, 11, 12, 14, 15, 16 RoleRequest |

| **MessageType:** | **RoleConfirmMsg** |
|---|---|
| **Description:** | RoleConfirmMsg is returned to the sender of a RoleRequestMsg if the Connection is successfully established. |
| **Parameters:** | RoleRequestMsg rrm - The original RoleRequestMessage that led up to this RoleConfirmMessage |
| **Usage:** | Figure 10, 11, 12, 15, 16, 19 RoleRequest |

| **MessageType:** | **RoleDeniedMsg** |
|---|---|
| **Description:** | RoleDeniedMsg is returned to the sender of a RoleRequestMsg if the requested Association is not established. |
| **Parameters:** | rrm - RoleRequestMessage |
| | roleAlternatives - if alternative roles can be offered |
| | - or |
| | reasonCode - the reason if the role was denied |
| **Usage:** | Figure 10, 11, 14 RoleRequest |

| **MessageType:** | **RoleCreateMsg** |
|---|---|
| **Description:** | The receiver of the message creates a new instance of the actor type. |
| **Parameters:** | java.util.Vector ports |
| **Usage:** | Figure 11, 13, 15, 16, 17, 18 RoleCreate |

| **MessageType:** | **RoleCreateAckMsg** |
|---|---|
| **Description:** | RoleCreateAckMsg is returned to the sender of a RoleCreateMsg if the role is successfully instantiated. |
| **Parameters:** | |
| **Usage:** | Figure 13, 15, 16. RoleCreate |

| **MessageType:** | **RolePlayMsg** |
|---|---|
| **Description:** | RolePlayMsg is sent from the parent Actor to a child Role to indicate that the child Role is to take part in a given Play with a given requestor. |
| **Parameters:** | RoleRequestMsg rrm - The original RoleRequestMessage that led up to this RoleConfirmMessage, java.util.Vector ports - ports of the invoked role |
| **Usage:** | Figure 10, 11, 14 , 15 RoleRequest |

| **MessageType:** | **RolePlayEndedMsg** |
|---|---|
| **Description:** | RolePlayEndedMsg is sent to the parent Actor when a child Role exits the playing state and enters the idle state. |
| **Parameters:** | |
| **Usage:** | Figure 22, 23 Role Remove, |
| | figure 20, 21 Role Release |

| **MessageType:** | **RoleReleaseMsg** |
|---|---|
| **Description:** | RoleReleaseMsg is sent from one of the Roles in an Association (requestor or requested) to the other Role in the Association in order to remove the Association. |
| **Parameters:** | |
| **Usage:** | Figure 19, 20, 21, 22, 23 Role Release |

| **MessageType:** | **RoleRemoveMsg** |
|---|---|
| **Description**: | RoleRemoveMsg is sent from an Actor to a Role to instruct it to commit suicide. |
| **Parameters:** | |
| **Usage:** | Figure 22, 23 Role Remove |

| **MessageType:** | **RoleUpdateMsg** |
|---|---|
| **Description:** | The receiver of this message performs an update of all its ports and connections |
| **Parameters:** | java.util.Vector ports - ports of the invoked role |
| **Usage:** | Figure 17, 18 ,19 Role configuration |

| **MessageType:** | **ServiceFileChangedMsg** |
|---|---|
| **Description:** | The receiver of this message is informed that its configuration file has changed |
| **Parameters:** | |
| **Usage:** | Figure 17, 18, 19 Role configuration |

### Role creation

The RoleRequest and RoleCreate protocols constitute the basic interaction patterns between Actors in ActorFrame. They cope with how Actors are created according to initial configuration and during execution.

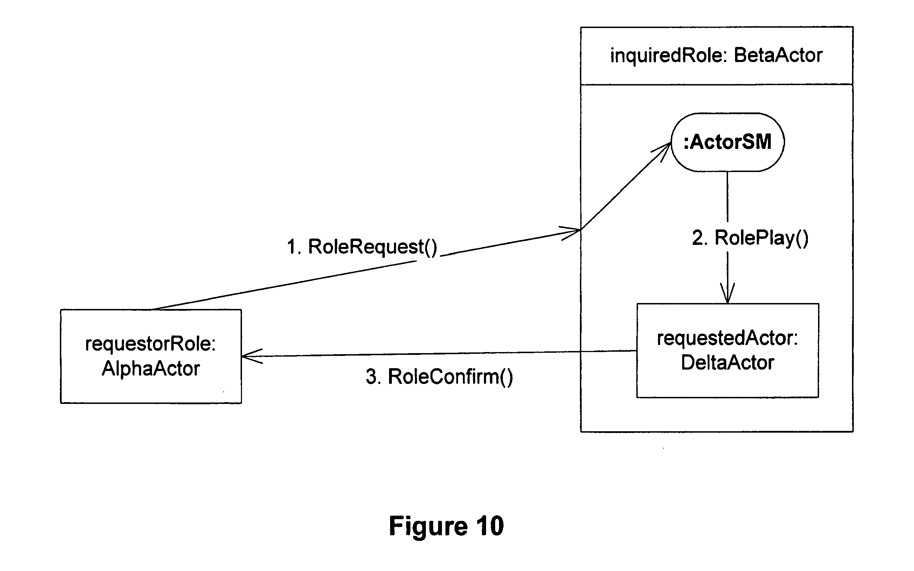

The communication diagram in figure 10 shows the involved parts of the RoleRequest interaction. In the sequence the actor names in figure 10 will be referred to.

### RoleRequest

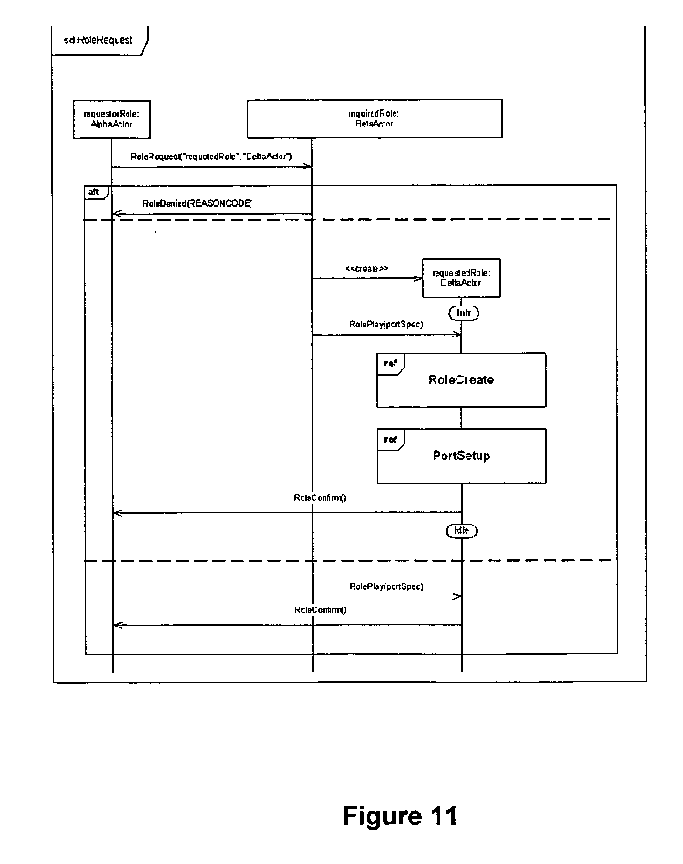

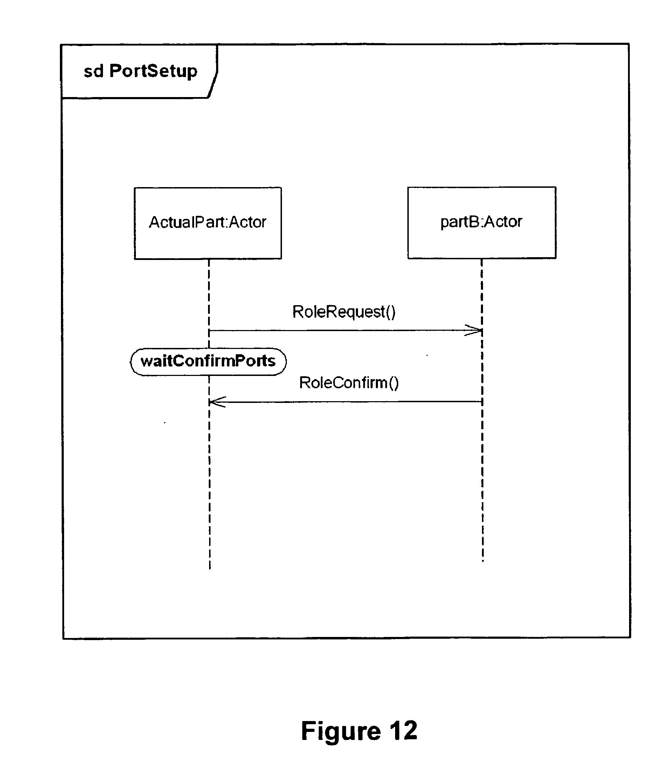

Figure 11shows the interplay between actors taking place when a *"requestor"* actor inquires an *"inquired"* actor to play a *"requested"* role. Three alternatives are showed in the diagram.
1. The *RoleDenied* signal indicates that the requested role is not permitted to be created. A code is shipped with the *RoleDenied* signal indicating the reason. Reasons for disallowing creation of actors are derived from the actor configuration files discussed under the Actor Configuration section above.
2. In case the role request is approved by the *"inquired"* actor, an actor creation process is initiated. The *"requested"* role is first instantiated. Further, from its parent actor it receives a *RolePlaMsgy* signal containing a specification of its initial connections to other actors. Based on the configuration for the *"requested"* role type a RoleCreate process can be started in order to create its internal structure. The next section RoleCreate will explain this sequence. After the internal structure is established the port connections are set up. This is achieved by using the *RoleRequest* protocol towards the relevant actors (illustrated in figure 12. Eventually a *RoleConfirmMsg* signal is sent back to the *"requestor"* confirming that the requested role is playing.
3. In case the *"requested"* role already exists it will be notified by a *RolePlayMsg* signal that the *"requestor"* role will create a connection. Eventually a *RoleConfirmMsg* signal is sent back to the *"requestor"* confirming that the requested role is playing.

### RoleCreate

The RoleCreate interaction pattern applies when an actor is created that contains inner parts. An actor may either be created at instantiation time of its parent if it is an initial part of the parent actor, or as a result of a role request from another actor.

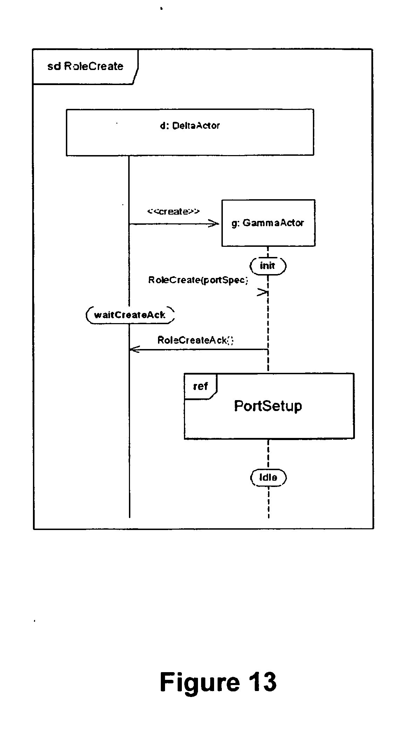

Figure 13 illustrates how the actor *d:DeltaActor* creates the inner part *g:GammaActor* at creation time. Actor *g:GammaActor* receives a *RoleCreate* message containing the port specification. If *g:GammaActor* contained inner parts it would now initiate the role creation of inner parts. In figure 13 *g:GammaActor* has initially an empty structure and hence a *RoleCreateAck* is issued back to the parent actor in order to notify that the inner actor is ready.

### Actor State Machines

Recall that all actor types presented so far in this chapter are subtypes of the generic type *Actor.* When subtypes such as *DeltaActor* or *GammaActor* are defined they will inherit behaviour from *Actor*. In this subsection the state machines related to the role request and role create interaction patterns will be presented. It is important to bear in mind that any parts involved in the interactions are of *Actor* type. When looking into the state machines different aspects will be involved dependent of whether the actor is an inquired, requested, initial role, etc. In the sequel it will be explicitly mentioned what view that is presented.

### Inquired Role State Machine

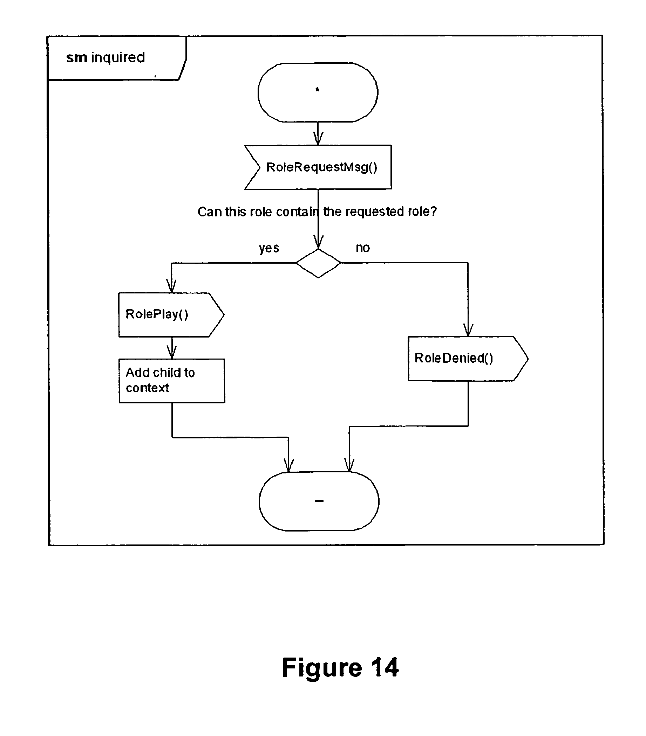

Figure 14 shows the relevant view of the actor state machine from an inquired role point of sight. The inquired role accepts the *RoleRequest* message in any state. Then based on its configuration it will either invoke a new role or retrieve an already existing role and pass on a *RolePlay* signal to the inner role. In case the inquired role cannot contain the inner role asked for a *RoleDenied* signal will be issued back to the requestor.

### Requested Role State Machine

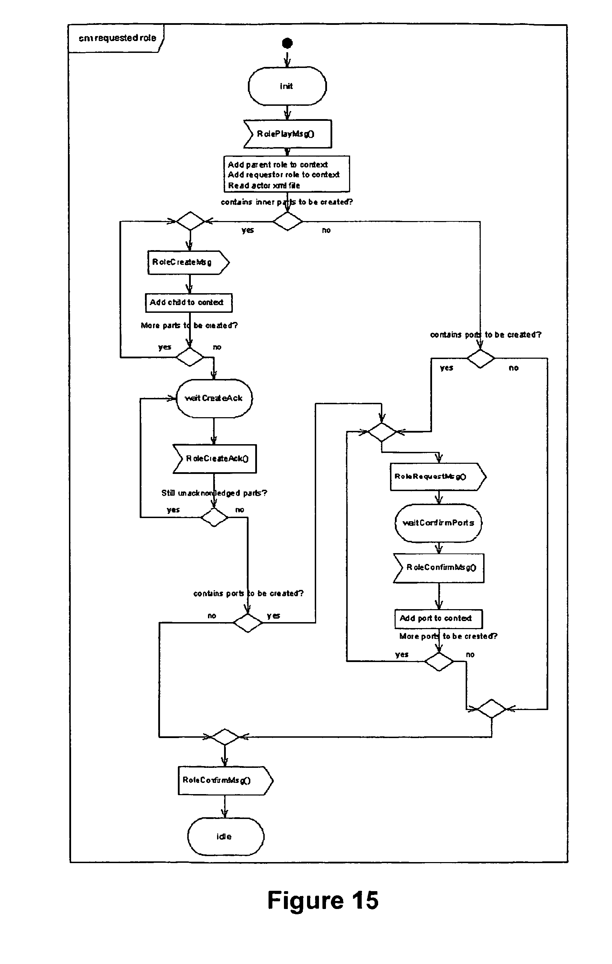

Figure 15 shows the relevant view of the actor state machine from a requested role point of sight. Initially the state machine will enter state init. It remains there until the *RolePlay* signal arrives containing the specification of port connections. The actor configuration file is then loaded along with updating the context variable of the actor. If the actor type contains inner parts these are first instantiated. The actor will be in state *waitCreateAck* as long as new instances are acknowledging successful creation. Further, any defined ports and connections to other actors are set up. The actor will wait in state *waitConfirmPort* for as long as the port setup process is active. Eventually a *RoleConfirm* signal is sent back to the requestor role.

### Initial part state machine

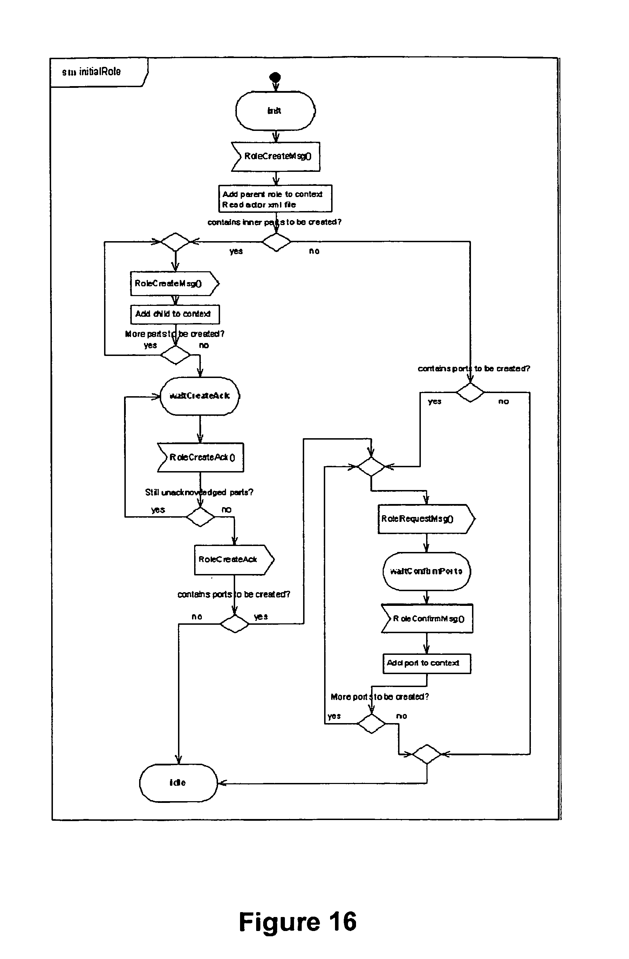

Figure 16 shows the relevant aspect of the actor state machine when it is instantiated as a result of a configuration where it belongs as an initial part (role). The diagram is very similar to figure 15 showing the invoked actor state machine. The only difference is that a *RoleCreate* signal is received rather than a *RolePlay* signal. This is to indicate that the role is instantiated on request from the parent actor rather than a requesting actor. Next difference is that the initialRole state machine will issue a *RoleCreateAck* signal to the parent to indicate that it is successfully instantiated with all inner parts. In the end no *RoleConfirm* signal is sent since this actor is requested by the parent actor.

### Role configuration

An actor provides support for a dynamic reconfiguration during execution based on actor xml files. New parts (roles) may be added and multiplicities can be changed. Existing ports can be removed, added or reconfigured to connect to other actors. This section describes the protocols and state machines involved in this action.

### Role update

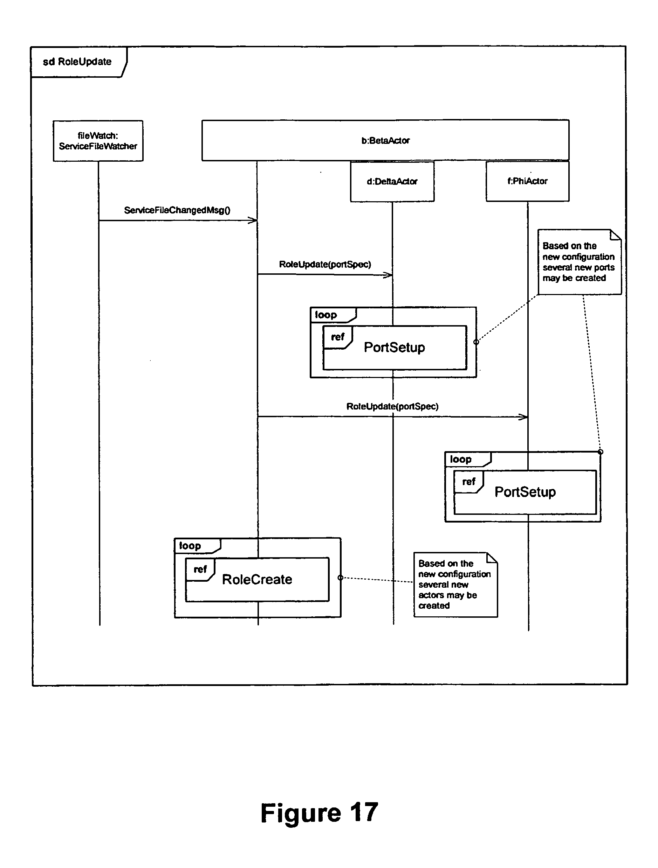

Figure 17 describes how a change in the xml configuration file is propagated to the relevant actors. The *fileWatcher* actor defined as part of the ServiceFrame framework, will inform the affected actors that their configuration file has changed. Upon receiving a *ServiceFileChangedMsg* the actor loads and inspects the new configuration. Any new roles are created, multiplicities are updated and the new port specifications are sent to all children roles of the actor. Every children role will then inspect the new port specification and update its connections accordingly.

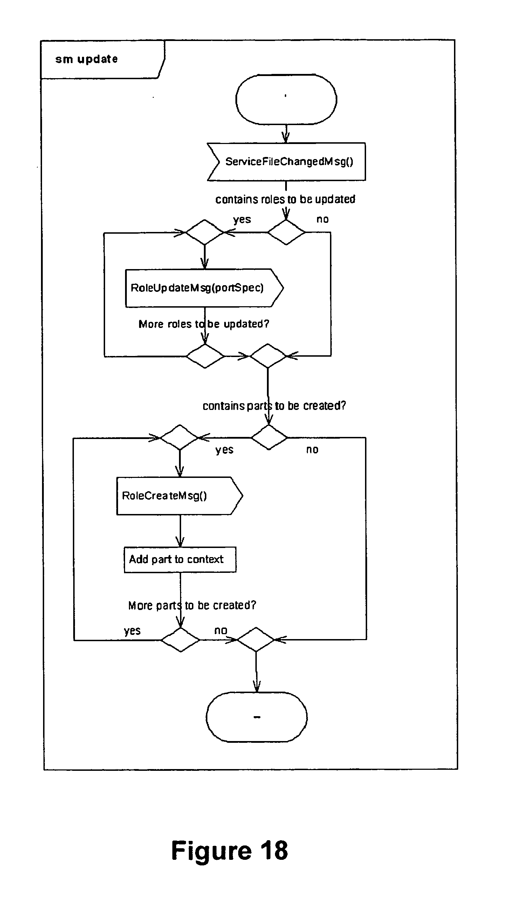

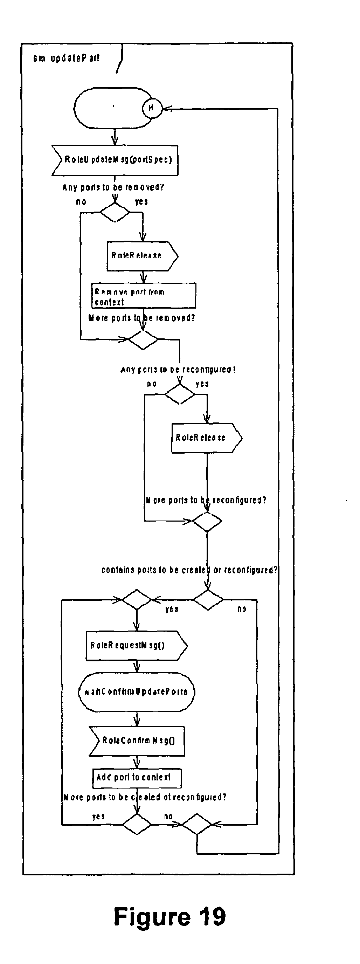

Figure 18 and figure 19 shows the involved parts of the Actor state machine for the updated actor and the updated parts respectively.

### Role Release

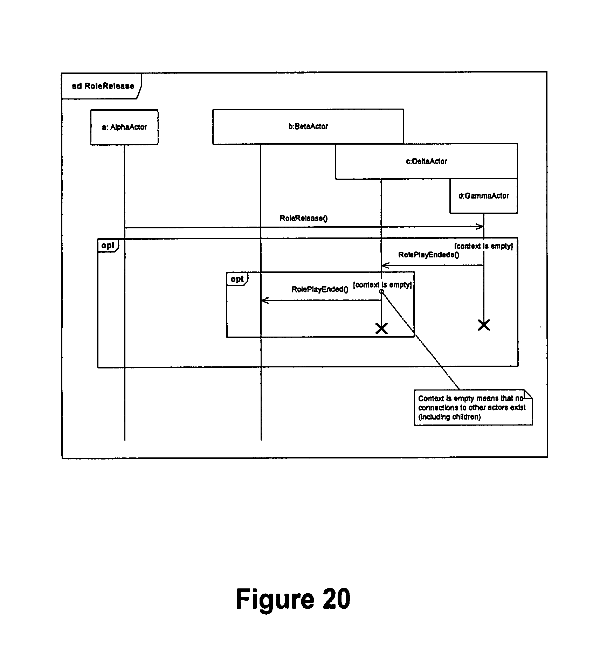

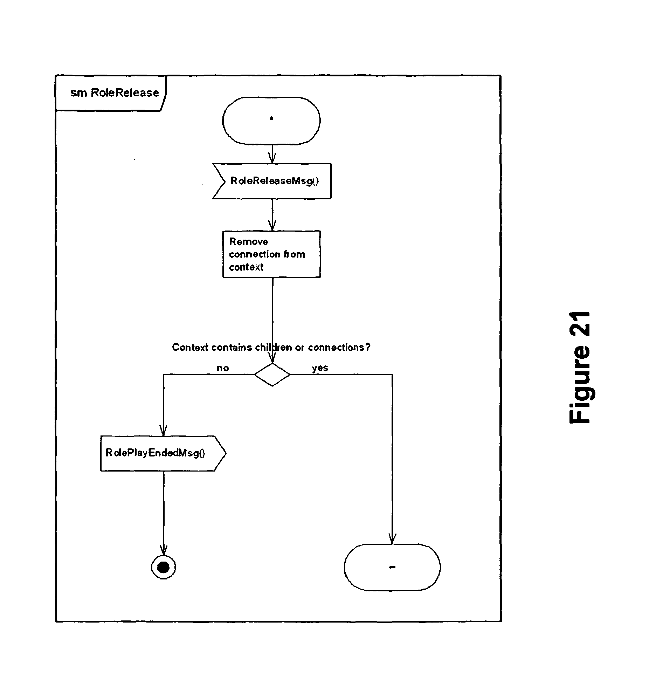

In order to release connections between actors, role release messages are used. Upon receiving a role release message the sender of the message is removed from the actor's context. This is described in figure 21. If the context of an actor is empty after a role release and it is not defined as an initial role it will cease to exist. The Actor indicates this to its parent by sending a *RolePlayEndedMsg* as shown in figure 20.

### Role Remove

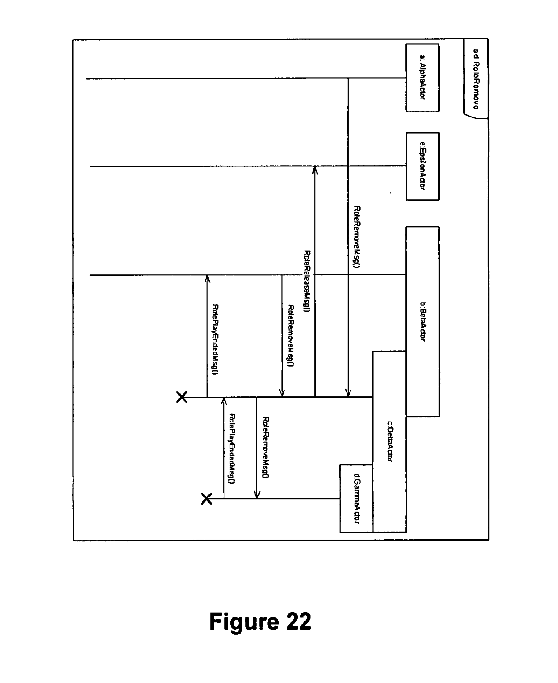

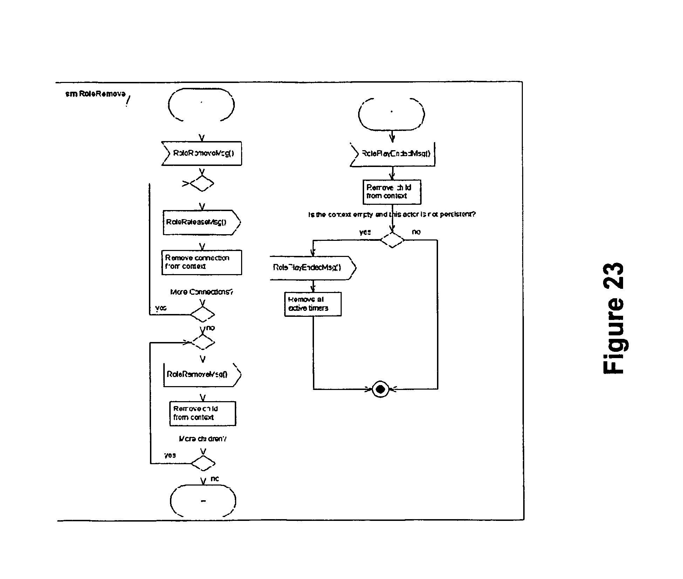

When a *RoleRemove* message is received the actor prepares for removal by sending out *RoleRelease* messages to all its connected roles. Further, it sends *RoleRemove* messages to all its inner actors. When *RolePlayEnded* messages are received from all its inner actors it will issue a *RolePlayEnded* message to its parent actor before it ceases to exist. The process is described in figure 22. Figure 23 shows the state machine view of the process.

### Advantages of the Invention

This invention provides a solution for changing service configuration without stopping execution of services. This invention also simplifies the process of configuring the components of services with high complexity. The invention also supports reconfiguration of services that are deployed on distributed platforms.

Applications and services have usually required off line changes in the implementation, which have caused unwanted downtime of the services. But this invention specifies a solution that allows the administrators of the service execution platforms to specify changes in the configuration, deploy new services and remove services without changing the actual implementation of the deployed services.

This invention introduces a new protocol for a run time configuration of deployed actors. Complex service components consist of several actors. The structures of the service components are described using configuration files. This makes it possible to dynamically change the structure of applications such as changing versions of components, alter between which components to use, to change number of instances while the services or components are executing. Change in the configuration file is detected and this invention automatically updates the running services although they are running distributed.

Service reconfiguration has not been possible in prior systems without changing the code of services and redeploying the services again. This has resulted in less availability of the services and longer lead-time for implementation of changes.

### Concepts and abbreviations

### Actor Concepts

*Actor* An actor is an active class with an own machine state machine and it may contain inner parts. Actors may be requested for playing a specific role.

*ActorAddress* The address of an actor, which consists of an actor identification represented as a string and an actor type that identifies the class type.

*Role* A role is an actor that is played by another actor.

*RoleType* The type identification of a role.

*RoleId* A name that identifies a specific role of a RoleType

*ActorType* Similar as RoleType, but denotes an actor

*ActorId* A name that identifies a specific role of an actorType

*Inquired actor* An actor that is requested to play a specific role

*Requested actor* The actor that the inquired actor is requested to play

*Requestor actor* The actor that makes an request to another actor (inquired actor) to play a specific role.

*Actor context* The context information of an actor that is specific for each actor instance as references to parent, requested and requestored actors and children or parts instances.

*ActorFrame protocol* The protocol actors use to invoke other actors and to control the lifecycle of actors.

*Role Request* A specific message used by the ActorFrame protocol to make requests for role to be played by other actors.

*Part* Similar to the UML2.0 concept part that represents instances of actors that are part of a containing actor.

*Port* Similar to the port concept in UML used to connect parts together.

### Abbreviations

| | |
|---|---|
| ACID | Atomicity, Consistency, Isolation and Durability |
| CORBA | Common Object Request Broker Architecture |
| CS | Common Object Request Broker Architecture |
| SM | State Machine |
| EJB | Enterprise Java Beans |
| IIOP | Internet Inter-Orb Protocol |
| J2EE | Java 2 Enterprise Edition |
| J2SE | Java 2 Standard Edition |
| JMS | Java Messaging Service |
| JNDI | Java Naming Directory Interface |
| JVM | Java Virtual Machine |
| MDK | Modelling Development Kit |
| MSC | Message Sequence Chart |
| RMI | Remote Method Invocation |
| RMI/IIOP | Remote Method Invocation over Internet Inter-Orb Protocol |
| RPC | Remote Procedure Call |
| SDL | Specification and Description Language |
| SOA | Service-Oriented Architecture |
| SOAP | Simple Object Access Protocol |
| UDDI | Universal Description, Discovery, and Integration |
| UML | Unified Modelling Language |
| UMTS | Universal Mobile Telecommunications System |
| WAP | Wireless Application Protocol |
| WSDL | Web Services Description Language |
| XML | Extensible Markup Language |
| API | Application Programming Interface |
| JAX-RPC | Java XML based Remote Procedure Call |
| MDA | Modelling Driven Approach |
| PIM | Platform Independent Models - used in MDA terminology |
| PSM | Platform Specific Models - used in MDA terminology |
| ALIN | Application Layer Internet working |
| MDA | Model Driven Architecture |
| JDBC | Java Data Base Connectivity |
| CMP | Container Managed Persistency |
| BMP | Bean Managed Persistency |
| MOM | Message Oriented Middleware |
| DNS | Domain Name Server |
| JMS | Java Messaging System |

### References

1. Bræk, Rolf, Husa, Knut Eilif and Melby, Geir. ServiceFrame Whitepaper, draft 1.9.2001, Ericsson NorARC, 2001.
2. Haugen, ⌀ystein and Moller-Pedersen, Birger. JavaFrame: Framework for Java-enabled modelling, ECSE2000, Ericsson NorARC, Stockholm, 2000.

## Claims

1. A method for dynamically deploying and reconfiguring services using a protocol suite running on a generic distributed middleware platform, said method comprising the steps of:
detecting changes in the configuration specification for one or more actors, an actor meaning an active class with an own machine state machine, and responding to changes in the configuration specification for the actors with a response sent to affected actors so as to take needed actions according to the changes, and
dynamically reconfiguring the affected actors with reconfigurations:
said method being **characterized in that** said dynamical reconfiguring comprises :
adding one or more new actors,
changing a number of maximum and minimum number of allowed actors, and
reconfiguring existing connections between actors.

2. A method according to claim 1,
wherein the method further comprises the following steps carried out on the protocol suite:
a role request message is sent to a first actor, thereby requesting the first actor to play a role, a role meaning an actor that is played by another actor, and
a role release message is sent from a first one of several roles, said first one of several roles being in an association to another role with the objective to remove said association to said another role, and
a role creation process is executed, comprising instantiating a new instance of an actor type, and
a role update process is executed, comprising instructing a receiver to perform an update of all its ports and connections, and
a role remove process is executed, comprising instructing an actor to remove itself.

3. A protocol suite for dynamically deploying and reconfiguring services running on a generic distributed middleware platform,
wherein the protocol suite is adapted to:
detect changes in the configuration specification for one or more actors, an actor meaning an active class with an own machine state machine, and to respond to said changes in the configuration specification for said one or more actors with a response sent to affected actors so as to take first actions, and
wherein the protocol suite is further adapted to dynamically reconfigure the affected actors with reconfigurations,
said protocol suite being **characterized in that** it is adapted to dynamically reconfigure the affected actors with reconfigurations by performing the steps of :
adding new instances of actors,
changing a number of maximum and minimum number of allowed actors instances, and removing or reconfiguring existing connections between actors

4. Protocol suite according to claim 3, wherein the services define a peer to peer structure of collaborating actors adapted to achieve a service aim

5. Protocol suite according to claim 3,
wherein the protocol suite is further adapted to perform the following steps :
a role request message is sent to a first actor, thereby asking if the actor is willing to play a role, a role meaning an actor that is played by another actor, and
a role release message is sent from a first one of several roles, said first one of several roles being in an association to another role with the objective to remove said association to said another role, and
a role creation process is executed, comprising instantiating a new instance of an actor type, and
a role update process is executed, comprising instructing a receiver to perform an update of all its ports and connections, and
a role remove process is executed, comprising instructing an actor to remove itself.

6. Protocol suite according to claim 5,
wherein the generic distributed middleware platform is specified in that it supports distributed actors executing on different nodes.

7. Protocol suite according to claim 5 or 6,
wherein the internal
structure of an actor comprises associated actor descriptor files having XML format and containing entries for:
ports connections and internal instances with multiplicities and initial configuration.

8. Protocol suite according to claim 7,
wherein the actor has an actor type and
each one of said actor description files comprises one or more of the following elements:
a description of the actor type,
a name of the actor type,
one or many part elements,
a domain where the actor will be instantiated,
a type of the part,
a minimum number of instances,
a maximum number of instances,

9. Protocol suite according to claim 8,
wherein each one of said one or many parts comprises at least one port.

10. Protocol suite according to claim 7-9,
wherein the actor has a behaviour specified by an actor state machine.

11. Protocol suite according to claim 10,
wherein the actor types are subtypes of a generic type actor and inherit behaviour from the generic type actor.

## Patentansprüche

1. Verfahren zum dynamischen Einsetzen und Rekonfigurieren von Diensten mit Verwendung einer Protokollreihe, die auf einer generischen verteilten Middleware-Plattform läuft, wobei das Verfahren die Schritte umfasst zum:
Erfassen von Veränderungen in der Konfigurationsspezifikation für einen oder mehr Akteure, wobei ein Akteur eine aktive Klasse mit einer eigenen Maschinenzustandsmaschine meint, und Reagieren auf Änderungen in der Konfigurationsspezifikation für die Akteure mit einer an betroffene Akteure gesendeten Antwort, um benötigte Aktionen gemäß den Änderungen vorzunehmen, und
dynamischen Rekonfigurieren der betroffenen Akteure mit Rekonfigurationen, wobei das Verfahren **dadurch gekennzeichnet ist, dass** das dynamische Rekonfigurieren umfasst:
Hinzufügen von einem oder mehr neuen Akteuren,
Ändern einer Anzahl einer Maximalanzahl oder Minimalanzahl zulässiger Akteure, und
Rekonfigurieren existierender Verbindungen zwischen Akteuren.

2. Verfahren gemäß Anspruch 1, wobei das Verfahren ferner die auf der Protokollreihe ausgeführten folgenden Schritte umfasst:
eine Rollenaufforderungsnachricht wird an einen ersten Akteur gesendet, wodurch der erste Akteur zum Spielen einer Rolle aufgefordert wird, wobei eine Rolle einen Akteur meint, der durch einen anderen Akteur gespielt wird, und
eine Rollenfreigabenachricht wird von einer ersten von einigen Rollen gesendet, wobei die erste von einigen Rollen in einer Verknüpfung mit einer anderen Rolle ist, mit der Aufgabe der Entfernung der Verknüpfung mit der anderen Rolle, und
ein Rollenerschaffungsprozess wird ausgeführt, der ein Instantiieren einer neuen Instanz eines Akteurtyps umfasst, und
ein Rollenaktualisierungsprozess wird ausgeführt, der ein Anweisen, an einen Empfänger, zum Durchführen einer Aktualisierung sämtlicher seiner Ports und Verbindungen umfasst, und
ein Rollenentfernungsprozess wird ausgeführt, der ein Anweisen, an einen Akteur, zum Entfernen seiner selbst umfasst.

3. Protokollreihe zum dynamischen Einsetzen und Rekonfigurieren von Diensten, die auf einer generischen verteilten Middleware-Plattform laufen, wobei die Protokollreihe ausgebildet ist zum:
Erfassen von Änderungen in der Konfigurationsspezifikation für einen oder mehr Akteure, wobei ein Akteur eine aktive Klasse mit einer eigenen Maschinenzustandsmaschine meint, und Reagieren auf die Änderungen in der Konfigurationsspezifikation für den einen oder die mehreren Akteure mit einer an betroffene Akteure gesendeten Antwort, um erste Handlungen vorzunehmen, und
wobei die Protokollreihe ferner ausgebildet ist zum dynamischen Rekonfigurieren der betroffenen Akteure mit Rekonfigurationen,
wobei die Protokollreihe ferner **dadurch gekennzeichnet ist, dass** sie zum dynamischen Rekonfigurieren der betroffenen Akteure mit Rekonfigurationen zum Durchführen der Schritte ausgebildet ist zum:
Hinzufügen neuer Instanzen von Akteuren,
Ändern einer Anzahl einer Maximalanzahl und Minimalanzahl zulässiger Akteurinstanzen, und
Entfernen oder Rekonfigurieren existierender Verbindungen zwischen Akteuren.

4. Protokollreihe gemäß Anspruch 3, wobei die Dienste eine Peer-zu-Peer-Struktur zusammenarbeitender Akteure definieren, die zum Erzielen eines Dienstziels ausgebildet sind.

5. Protokollreihe gemäß Anspruch 3, wobei die Protokollreihe ferner ausgebildet ist zum Durchführen der folgenden Schritte:
eine Rollenaufforderungsnachricht wird an einen ersten Akteur gesendet, wodurch gefragt wird, ob der Akteur eine Rolle spielen möchte, wobei eine Rolle einen Akteur meint, der durch einen anderen Akteur gespielt wird, und
eine Rollenfreigabenachricht wird von einer ersten von einigen Rollen gesendet, wobei die erste einiger Rollen in einer Verknüpfung mit einer anderen Rolle ist, mit der Aufgabe zum Entfernen der Verknüpfung mit der anderen Rolle, und
ein Rollenerschaffungsprozess wird ausgeführt, der ein Instantiieren einer neuen Instanz eines Akteurtyps umfasst, und
ein Rollenaktualisierungsprozess wird ausgeführt, der ein Anweisen, an einen Empfänger, zum Durchführen einer Aktualisierung sämtlicher seiner Ports und Verbindungen umfasst, und
ein Rollenentfernungsprozess wird ausgeführt, der ein Anweisen, an einen Akteur, zum Entfernen seiner selbst umfasst.

6. Protokollreihe gemäß Anspruch 5, wobei die generische verteilte Middleware-Plattform **dadurch** spezifiziert ist, dass sie verteilte Akteure unterstützt, die auf unterschiedlichen Knoten ausgeführt werden.

7. Protokollreihe gemäß Anspruch 5 oder 6, wobei die interne Struktur eines Akteurs verknüpfte Akteur-Deskriptor-Dateien mit dem XML-Format und mit Einträgen umfasst für:
Ports, Verbindungen und interne Instanzen mit Multiplizitäten und einer Anfangskonfiguration.

8. Protokollreihe gemäß Anspruch 7, wobei der Akteur einen Akteurtyp hat und jede der Akteur-Deskriptor-Dateien eines oder mehrere der folgenden Elemente umfasst:
- eine Beschreibung des Akteurtyps,
- einen Namen des Akteurtyps,
- ein oder viele Teilelemente,
- eine Domäne, wo der Akteur instantiiert werden wird,
- einen Typ des Teils,
- eine Minimalanzahl von Instanzen,
- eine Maximalanzahl von Instanzen.

9. Protokollreihe gemäß Anspruch 8, wobei jeder des einen oder der vielen Teile wenigstens einen Port umfasst.

10. Protokollreihe gemäß Anspruch 7 - 9, wobei der Akteur ein durch eine Akteur-Zustandsmaschine spezifiziertes Verhalten hat.

11. Protokollreihe gemäß Anspruch 10, wobei die Akteurtypen Untertypen eines generischen Akteurtyps sind und ein Verhalten von dem generischen Akteurtyp erben.

## Revendications

1. Procédé destiné à déployer et à modifier de façon dynamique des services en utilisant une suite de protocoles s'exécutant sur une plate-forme de logiciel de couches intermédiaires distribuée et générique, ledit procédé comprenant les étapes :
de détection de changements dans la spécification de configuration pour un ou plusieurs acteurs, un acteur signifiant une classe active avec une machine d'état de machine propriétaire, et de réponse à des changements dans la spécification de configuration pour les acteurs avec une réponse envoyée à des acteurs affectés afin de prendre des mesures nécessaires selon les changements, et
de reconfiguration dynamique des acteurs affectés avec des reconfigurations,
ledit procédé étant **caractérisé en ce qu'**une reconfiguration dynamique comporte :
l'ajout d'un ou de plusieurs nouveaux acteurs,
le changement d'un nombre parmi un nombre maximal et minimal d'acteurs autorisés, et
la reconfiguration de connexions existantes entre des acteurs.

2. Procédé selon la revendication 1, dans lequel le procédé comporte de plus les étapes suivantes qui sont réalisées sur la suite de protocoles :
un message de requête de rôle est envoyé à un premier acteur, demandant de cette façon au premier acteur de jouer un rôle, un rôle signifiant un acteur qui est joué par un autre acteur, et
un message de libération de rôle est envoyé à partir d'un premier rôle parmi plusieurs rôles, ledit premier rôle parmi plusieurs rôles étant en association avec un autre rôle avec l'objectif de supprimer ladite association audit autre rôle, et
un processus de création de rôle est exécuté, comprenant l'instanciation d'une nouvelle instance d'un type d'acteur, et
un processus de mise à jour de rôle est exécuté, comprenant une fourniture d'instruction à un récepteur pour effectuer une mise à jour de tous ses ports et connections, et
un processus de suppression de rôle est exécuté, comprenant une fourniture d'instruction à un acteur pour se supprimer.

3. Suite de protocoles destinée à déployer et modifier de façon dynamique des services s'exécutant sur une plate-forme de logiciel de couches intermédiaires distribuée et générique, où la suite de protocoles est conçue pour :
détecter des changements dans la spécification de configuration pour un ou plusieurs acteurs, un acteur signifiant une classe active avec une machine d'état de machine propriétaire, et pour répondre auxdits changements dans la spécification de configuration pour ledit un ou plusieurs acteurs avec une réponse envoyée à des acteurs affectés afin de prendre des premières actions, et où la suite de protocoles est de plus conçue pour modifier de façon dynamique les acteurs affectés avec des reconfigurations,
ladite suite de protocoles étant **caractérisée en ce qu'**elle est conçue pour modifier de façon dynamique les acteurs affectés avec des reconfigurations en effectuant les étapes :
d'ajout de nouvelles instances d'acteurs,
de changement d'un nombre parmi un nombre maximal et minimal d'instances d'acteurs autorisés, et
de suppression ou de reconfiguration de connexions existantes entre des acteurs.

4. Suite de protocoles selon la revendication 3, dans laquelle les services définissent une structure partagée d'acteurs de collaboration conçue pour réaliser un objectif de service.

5. Suite de protocoles selon la revendication 3, dans laquelle la suite de protocoles est conçue de plus pour effectuer les étapes suivantes :
un message de requête de rôle est envoyé à un premier acteur, demandant de cette façon si l'acteur est disposé à jouer un rôle, un rôle signifiant un acteur qui est joué par un autre acteur, et
un message de libération de rôle est envoyé à partir d'un premier rôle parmi plusieurs rôles, ledit premier rôle parmi plusieurs rôles étant en association avec un autre rôle avec l'objectif de supprimer ladite association audit autre rôle, et
un processus de création de rôle est exécuté, comprenant l'instanciation d'une nouvelle instance d'un type d'acteur, et
un processus de mise à jour de rôle est exécuté, comprenant une fourniture d'instruction à un récepteur pour effectuer une mise à jour de tous ses ports et connections, et
un processus de suppression de rôle est exécuté, comprenant une fourniture d'instruction à un acteur pour se supprimer.

6. Suite de protocoles selon la revendication 5, dans laquelle la plate-forme de logiciel de couches intermédiaires distribuée et générique est spécifiée en ce qu'elle prend en charge des acteurs distribués s'exécutant sur différents noeuds.

7. Suite de protocoles selon la revendication 5 ou 6, dans laquelle la structure interne d'un acteur comporte des fichiers de descripteur d'acteur associés ayant un format XML et contenant des entrées pour :
des ports, des connexions et des instances internes avec des multiplicités et une configuration initiale.

8. Suite de protocoles selon la revendication 7, dans laquelle l'acteur a un type d'acteur et chacun desdits fichiers de description d'acteur comporte un ou plusieurs parmi les éléments suivants :
une description du type d'acteur,
un nom du type d'acteur,
un ou plusieurs éléments de partie,
un domaine où l'acteur sera instancié,
un type de la partie,
un nombre minimal d'instances,
un nombre maximal d'instances.

9. Suite de protocoles selon la revendication 8, dans laquelle chacune desdites une ou plusieurs parties comporte au moins un port.

10. Suite de protocoles selon les revendications 7 à 9, dans laquelle l'acteur a un comportement spécifié par une machine d'état d'acteur.

11. Suite de protocoles selon la revendication 10, dans laquelle les types d'acteur sont des sous-types d'un acteur du type générique et héritent du comportement à partir de l'acteur du type générique.
